# EUROPÄISCHE PATENTSCHRIFT

(11) **EP 0 661 324 B1**
(45) Veröffentlichungstag und Bekanntmachung des Hinweises auf die Patenterteilung: **12.07.2000**
(21) Anmeldenummer: 94118752.8
(22) Anmeldetag: 29.11.1994
(51) Int. Cl.: C08G 59/68, C08G 59/18, G03F 7/029

(54) **Lichtinitiiert kationisch härtende Epoxidmasse und ihre Verwendung**
Hight-initiated cationic curable epoxyresin compositions and their use
Compositions de résine époxyde durcissables cationiquement sous influence de la lumière et leur utilisation

(30) Priorität: 01.12.1993 DE 4340949
(43) Veröffentlichungstag der Anmeldung: 05.07.1995
(73) Patentinhaber: DELO Industrieklebstoffe GmbH & Co. KG, 86899 Landsberg (DE)
(72) Erfinder: Eckhardt, Gunther, Dr., D-82346 Frieding (DE); Wanek, Erich, Dr., D-86916 Kaufering (DE)
(74) Vertreter: Bunke, Holger, Dr.rer.nat. Dipl.-Chem.

(56) Entgegenhaltungen:
- EP-A- 0 344 910
- EP-A- 0 429 250
- EP-A- 0 508 951
- DE-A- 2 025 814

## Beschreibung

Die Erfindung betrifft lichtinitiiert kationisch härtende Epoxidmassen, die insbesondere für das Verkleben, Vergießen, Abdichten und Beschichten von Substraten verwendet werden können.

Insbesondere betrifft die Erfindung Epoxidmassen, die unter Einwirkung von sichtbarem Licht aktiviert werden und ohne weitere Zuführung von Licht oder Wärme aushärten.

Die Anwendung von Epoxidharzen für das Verkleben, Vergießen, Abdichten und Beschichten ist seit langem bekannt. Epoxidharze zeichnen sich durch eine hohe Kohäsion und ein sehr gutes Adhäsionsvermögen auf einer Vielzahl von Substraten aus.

Es ist ebenfalls seit langem bekannt, durch lichtinitiierte kationische Polymerisation von cycloaliphatischen oder aromatischen bzw. aliphatischen Epoxidharzen, zu Polyethermassen zu gelangen.

So wird beschrieben, zur Photoaktivierung der kationisch polymerisierbaren Massen, ultraviolette Strahlung zu verwenden. Die aus der EP-A-0 279 199 sowie der JP-A-61/98 740 bekannten UV-härtbaren Massen zeigen eine große Inhomogenität der Aushärtung in Abhängigkeit von der jeweils realisierten lokalen Strahlungsintensität. So kommt es beispielsweise bei Auftrag des Klebstoffes in Form eines Tropfens oder einer Raupe zu einer Hautbildung und damit zu einer stark verringerten bzw. nicht mehr vorhandenen Klebewirkung. Auch bei Anwendungsfällen des Vergießens, Abdichtens oder Beschichtens ergeben sich mit diesen in UV-Licht härtbaren Massen Schwierigkeiten aufgrund der unzureichenden Homogenität der Aushärtung. Im allgemeinen erfordern UV-härtbare Epoxidmassen eine thermische Nachhärtung, was mit zusätzlichen Kosten verbunden ist und durch die thermische Beständigkeit der Substrate beschränkt wird.

Aus der DE-PS 26 18 897 sowie den DE-OS 30 35 807 und 30 46 034 ist die Verwendung von kationisch polymerisierbaren Massen zum Kleben oder Vergießen von Substraten bekannt, die unter der Einwirkung von sichtbarem Licht im Wellenlängenbereich von 380 bis 800 nm gehärtet werden. Diese Massen enthalten als Photoinitiatoren Diaryliodoniumsalze oder Triarylsulfoniumsalze, jeweils zusammen mit einem Photosensibilisator in Form eines kationischen oder basischen Farbstoffes.

In den Beispielen der DE-OS 30 46 034 werden Bestrahlungszeiten von 5 bis 10 Minuten angegeben. Die vollständige Aushärtung der so bestrahlten Massen tritt dann bei Raumtemperatur 1 bis 3 Stunden nach Beendigung der Bestrahlung ein.

Aus den DE-OS 36 43 400 und 37 24 838 sind ebenfalls Verfahren zum Kleben von Substraten mittels kationisch polymerisierbarer Massen bekannt, die vor ihrer Fügung durch Bestrahlen mit Licht im Wellenlängenbereich von 200 bis 700 nm aktiviert werden und dann ohne weitere Bestrahlung durch Stehenlassen im Dunkeln aushärten. Diese Massen werden etwa 1 bis 3 Minuten lang bestrahlt und nach Beendigung der Bestrahlung unter einem Druck von 1 bis 200 MPa 2 bis 36 Stunden lang bei Raumtemperatur zur vollständigen Aushärtung stehen gelassen. Als Photoinitiatoren wurden bei diesen Massen Arylsulfinate, Diaryliodoniumsalze und Triarylsulfoniumsalze, jeweils zusammen mit Sensibilisatoren in Form von Farbstoffen bzw. Kampferchinon, verwendet.

In der EP-A-0 388 775 wird ein Verfahren zum Kleben und Vergießen von Substraten sowie eine Vorrichtung beschrieben, bei dem die Belichtung zur Photoaktivierung der Massen durch Bestrahlen mit Licht im Wellenlängenbereich von 400 bis 600 nm so lange durchgeführt wird, daß die Massen nach Beendigung der Belichtung noch mehr als 30 sec. lang uneingeschränkt applizierbar sind. Dabei beträgt die Dauer der Bestrahlung (Aktivierungszeit) 0,5 bis 300 Sekunden, während die offene Zeit nach Beendigung der Bestrahlung bis zu 60 Minuten betragen kann. Bei diesem bekannten Verfahren läßt sich der Beginn des Viskositätsanstiegs der Massen jedoch nicht um mindestens 30 Sekunden, gerechnet ab Beginn der aktivierenden Bestrahlung, hinauszögern.

Aus EP-A-0 344 910 (vergleiche dort Beispiel 3 und Tabelle III) ist eine lichtinitiiert kationisch härtende Epoxidmasse bekannt, die ein Ferrocenium-Komplexsalz, eine cycloaliphatische Epoxidgruppen enthaltende Verbindung sowie als Lösungsmittel ein Gemisch aus Polyethylenglykol und Gamma-Butyrolakton enthält. Verzögerer und Beschleuniger sind als Komponenten dieser Epoxidmasse nicht erwähnt. Die Masse ist bestimmt zur Verwendung für Schutzüberzüge und als Bindemittel für magnetische Teilchen oder Schleifmittel sowie als Klebstoffe und in der Druckindustrie.

Aus DE-A-20 25 814 sind lichtinitiiert kationisch härtende Epoxidmassen bekannt, die (A) dreiwertige Phenole, (B) ein organisches Peroxid, (C) ein Ferrocenium-Komplexsalz und (D) ein cycloaliphatische Epoxidgruppen enthaltendes Monomer sowie weitere Bestandteile, insbesondere Säureanhydride, enthalten. Phenol und Peroxid werden dabei neben Chinon als Härtungsadditive beschrieben, die den Epoxidmassen ausgezeichnete latente Härtungseigenschaften und eine vorteilhafte Härtungscharakteristik verleihen sollen.

Bei den vorstehend beschriebenen, bekannten, lichtinitiiert kationisch härtenden Massen hat es sich jedoch als sehr schwierig erwiesen, die Reaktivität der Massen so einzustellen, daß die notwendige Aktivierungszeit kurz ist, die Viskosität der aktivierten Masse während der Belichtung oder Bestrahlung nicht oder nicht nennenswert ansteigt, eine uneingeschränkte Applizierbarkeit innerhalb eines der offenen Zeit entsprechenden Zeitraums erreicht wird und dennoch nach der Belichtung sehr schnell eine ausreichende Funktionsfähigkeit bzw. Belastbarkeit des Verbundes ohne weitere Belichtung oder Zuführung von Wärme erreichbar ist.

Um Mißverständnisse anzuschließen, sei her darauf hingewiesen, daß die "offene Zeit" oder "Topfzeit" härtbarer Polymerisate, innerhalb der die Massen uneingeschränkt applizierbar sind, nicht gleichbedeutend ist mit der Zeitspanne, innerhalb der noch kein Viskositätsanstieg der Massen festzustellen ist und die mit dem Start der Belichtung beginnt. Vielmehr bleiben die Massen auch dann noch für eine gewisse Zeit uneingeschränkt applizierbar, wenn der Viskositätsanstieg schon begonnen hat.

Der Erfindung liegt die Aufgabe zugrunde, lichtinitiiert kationisch härtende Epoxidmassen bereitzustellen, die durch kurzzeitige Bestrahlung mit Wellenlängen im Bereich des sichtbaren Lichtes (380 bis 700 nm) aktivierbar sind und die mindestens 30 Sekunden lang, gerechnet ab Beginn der aktivierenden Bestrahlung, keinen Viskositätsanstieg erleiden und nach der Belichtung mindestens 30 Sekunden lang uneingeschränkt applizierbar bleiben und nach Beendigung der Belichtung ohne weitere Energiezufuhr, insbesondere ohne thermische Nachhärtung, innerhalb von 24 Stunden bei Raumtemperatur so weit aushärten, daß ein mit den Massen hergestellter Klebeverbund funktionsfähig und belastbar ist.

Diese Aufgabe wird erfindungsgemäß gelöst durch lichtinitiiert kationisch härtende Epoxidmassen, die, bezogen auf jeweils 100 Teile der Gesamtmasse, aus
(A) 0,001 bis 10 Teilen mindestens eines Verzögerers, ausgewählt aus der aus folgenden Verbindungsklassen und Verbindungen bestehenden Gruppe:
   a) reduzierend wirkende Substanzen,
   b) basische Substanzen,
   c) Komplexbildner oder Chelatisierungsmittel,
(B) 0,001 bis 10 Teilen mindestens eines Beschleunigers,
(C) 0,1 bis 5 Teilen eines Ferrocenium-Komplexsalzes,
(D) 10 bis 99,5 Teilen mindestens einer cycloaliphatische Epoxidgruppen enthaltenden Verbindung, sowie
(E) 0 bis 60 Teilen üblicher Hilfs- und Zusatzstoffe wie Flexibilisierungsmittel, radikalisch polymerisierbare Oligomere, Füllstoffe, Pigmente, Farbstoffe und Stabilisatoren,
bestehen.

Es hat sich überraschenderweise gezeigt, daß die aufeinander abgestimmte gleichzeitige Anwesenheit der "Antipoden" Verzögerer und Beschleuniger in besonderer, wissenschaftlich noch nicht völlig geklärter Weise durch Wechselwirkung mit dem als Initiator eingesetzten Ferrocenium-Komplexsalz zu Epoxidmassen führt, deren Härtungsverlauf für jeden gewünschten Anwendungsfall maßgeschneidert werden kann, und zwar einerseits durch geeignete Auswahl der als Verzögerer und Beschleuniger verwendeten Verbindungen und andererseits durch Auswahl eines geeigneten Mengenverhältnisses zwischen den beiden Antipoden innerhalb der angegebenen Bereiche. Die erfindungsgemäßen Massen härten bei Raumtemperatur innerhalb von 24 Stunden ohne weitere äußere Energiezufuhr soweit aus, daß ein damit hergestellter Klebeverbund voll funktionsfähig und belastbar ist.

Als Verzögerer im Sinne der Erfindung werden Verbindungen verstanden, die den Viskositätsanstieg lichtinitiiert kationisch härtender Zubereitungen zeitlich hinauszögern, aber die vollständige Aushärtung der Zubereitung nicht verhindern.

Als Verzögerer sind erfindungsgemäß verschiedene Verbindungsklassen und Verbindungen einsetzbar, nämlich z. B.
a) reduzierend wirkende Substanzen wie Ascorbinsäure und Oxalsäure;
b) basische Substanzen oder mit basischen Substanzen behandelte Oberflächen wie Alkoholate und/oder Amine;
c) Komplexbildner oder Chelatisierungsmittel, vorzugsweise solche, die aus den Verbindungsklassen der β-Diketone, 8-Hydroxychinoline und der davon abgeleiteten Verbindungen sowie der Oxime ausgewählt sind.

In der Gruppe der Komplexbildner und Chelatisierungsmittel sind Beispiele für geeignete Diketone: Acetylaceton, Dibutyrylmethan, Di(2,2-dimethylpropionyl)methan, Dipentanoylmethan, Benzoylaceton, Dibenzoylaceton, Dibenzoylmethan und Benzoyltrifluoroaceton.

Die erfindungsgemäß als Verzögerer einzusetzenden in 8-Stellung substituierten Chinoline besitzen die allgemeine Formel 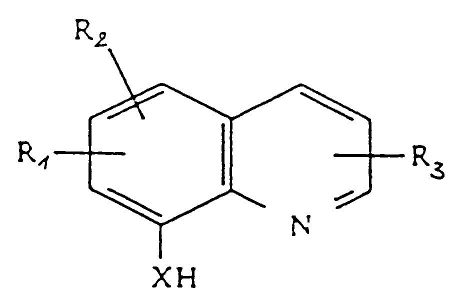 worin R₁ ,R₂ und R₃ unabhängig voneinander Wasserstoff, Halogen, Alkyl, Nitro, Nitroso, Sulfo und X entweder O, S oder NH bedeuten.

Neben dem bekannten "Oxin", dem 8-Hydroxychinolin, kommen demnach beispielsweise 2-Methyl-8-hydroxychinolin ("8-Hydroxychinaldin"), 5,7-Dichloro-8-hydroxychinolin, 5,7-Dinitro-8-hydroxychinolin, 4-Methyl-8-hydroxychinolin, 5-Methyl-8-hydroxychinolin und 8-Mercaptochinolin erfindungsgemäß als Verzögerer in Betracht.

Bei einer bevorzugten Ausführungsform der Erfindung enthält die Epoxidharzmasse als Verzögerer mindestens ein 8-Hydroxychinolin und/oder mindestens ein 8-Mercaptochinolin, jeweils in Kombination mit mindestens einer anderen verzögernd wirkenden Verbindung.

Als Verzögerer mit Oximstruktur können hydroxysubstituierte Oxime wie beispielsweise Salicylaldoxim und α-Benzoinoxim oder Dioxime wie beispielsweise Dimethylglyoxim und α-Benzyldioxim verwendet werden.

Weiterhin können solche Chelatisierungsmittel erfindungsgemäß als Verzögerer eingesetzt werden, die als Schwermetallfänger in wäßrigen oder nicht-wäßrigen Systemen wirken und beispielsweise aus der US-A-4 500 494 bekannt sind. Typische Vertreter solcher Chelatisierungsmittel sind: Dithizon, Neocuproin, O-Phenanthrolin, N-Benzoyl-N-phenylhydroxylamin, Rhodamin B, Ethylendiamintetraessigsäure (EDTA) und ihre Salze, Nitrilotriessigsäure.

Für die Herstellung der erfindungsgemäßen Massen werden 8-Hydroxychinolin und seine Derivate bevorzugt.

Insbesondere hat sich 8-Hydroxychinolin ("Oxin") in Konzentrationen von 0,0001 bis 10 Teilen, bezogen auf je 100 Teile der Gesamtmasse, und bevorzugt 0,001 bis 0,5 Teilen bewährt.

Als Beschleuniger im Sinne der Erfindung werden Verbindungen verstanden, die einzelne Teilschritte des Polymerisationsablaufes oder den gesamten Polymerisationsablauf beschleunigen. Diese Beschleuniger können beispielsweise Einfluß nehmen auf die Reaktionen, die unter Einwirkung von Licht ablaufen und aus dem Photoinitiator die reaktiven Spezies entstehen lassen. Die erfindungsgemäß einzusetzenden Beschleuniger können aber auch die Einzelschritte der Anlagerung der Monomeren an die reaktiven Spezies beschleunigen.

Dementsprechend sind eine Reihe von Verbindungsklassen bzw. Verbindungen geeignet, eine Beschleunigung der kationischen Polymerisation von Epoxidgruppen-haltigen Massen zu bewirken. Im allgemeinen kann durch Zusatz von oxidierend wirkenden Verbindungen eine Beschleunigung der kationischen Polymerisation bewirkt werden. Dabei ist oft unklar, in welche Teilschritte des recht komplizierten Reaktionsablaufes der Beschleuniger eingreift. Die Wahl des Beschleunigers ist so zu treffen, daß andere negative Erscheinungen, wie beispielsweise eine Verringerung der Lagerstabilität durch Anstieg der Viskosität vor der Belichtung sicher verhindert werden.

Mit Vorteil werden in den erfindungsgemäßen Zubereitungen oxidative Beschleuniger aus der Reihe der Peroxide eingesetzt. Hierbei können die bekannten Klassen der organischen Peroxide, wie Hydroperoxide, Perester, Percarbonate, Diacylperoxide und Perketale verwendet werden. Die Auswahl der Peroxide richtet sich nach der Löslichkeit in der Epoxidzubereitung und der Lagerbeständigkeit dieser Zubereitungen, bzw. des Peroxides in diesen Zubereitungen.

Bei Verwendung eines oder mehrerer Tertiärbutylperester wird erfindungsgemäß eine Konzentration von 0,001 bis 3 Gew.-% bevorzugt, während bei Verwendung eines oder mehrerer organischer Hydroperoxide eine Konzentration von 0,001 bis 5 Gew.-% bevorzugt wird.

Für die Durchführung des erfindungsgemäßen Verfahrens haben sich Tertiärbutylperester und/oder organische Hydroperoxide wie beispielsweise Cumolhydroperoxid in Konzentrationen von 0,001 bis 10 Teilen, bezogen auf je 100 Masseteile der Zubereitung, und bevorzugt von 0,01 bis 5 Teilen besonders bewährt.

Erfindungsgemäß werden in den Zubereitungen Ferrocenium-Komplexsalze als Photoinitiatoren eingesetzt, wobei als komplexes Anion Hexafluoroantimonat, Hexafluoroarsenat, Hexafluorophosphat, Tetrafluoroborat bevorzugt sind.

Diese Photoinitiatoren gehören zu den Metallocenverbindungen, die in der EP-A-0 18 744 beschrieben sind, auf die hier vollinhaltlich Bezug genommen wird.

Das zur Herstellung der erfindungsgemäßen Massen besonders bevorzugte Ferroceniumhexafluoroantimonat kann beispielsweise in Form des Salzes zu der fertigen Zubereitung hinzugegeben und unter Ausschluß von Licht darin gelöst werden. Nach einer bevorzugten Ausführungsform der Herstellung der erfindungsgemäßen Massen wird in völliger Dunkelheit eine 30 - 70 %ige Lösung des Ferroceniumhexafluoroantimonates in Propylencarbonat hergestellt und entsprechende Anteile dieser Lösung zu der fertigen Zubereitung hinzugegeben.

Die polymerisierbaren Massen enthalten Epoxid-Verbindungen mit cycloaliphatischen Epoxidgruppen, wobei die einzelnen Verbindungen mindestens eine und höchstens sechs Epoxidgruppen tragen können.

Wegen der erhöhten Reaktivität im Zuge der kationischen Polymerisation sind cycloaliphatische Epoxidharze gegebenenfalls im Gemisch mit anderen Epoxidharztypen bevorzugt. Mit besonderem Vorzug werden Gemische von cycloaliphatischen Epoxidverbindungen eingesetzt. Hierbei hat es sich als besonders vorteilhaft erwiesen, Gemische zu verwenden, deren Hauptkomponente aus cycloaliphatischen Epoxyverbindungen mit einem mittleren Epoxyäquivalent von 120 bis 140 g besteht. Als weitere cycloaliphatische Epoxyverbindungen können solche mit Epoxyäquivalentmassen von 200 bis 3000 eingesetzt werden. In einer bevorzugten Ausführungsform des erfindungsgemäßen Verfahrens wird als Hauptbestandteil der Zubereitungen das 3,4-Epoxycyclohexylmethyl-3',4'-epoxycyclohexancarboxylat in Verbindung mit kettenverlängerten cycloaliphatischen Epoxidharzen, hergestellt aus langkettigen Dicarbonsäuren und difunktionellen cycloaliphatischen Epoxidharzen verwendet. Dabei betragen die Anteile dieser kettenverlängerten cycloaliphatischen Epoxidharze mit Epoxyäquivalentgewichten von 200 bis 3000 g 1 bis 70 Gew.-% oder 1 bis 50 Gew.-% und bevorzugt 10 bis 45 Gew.-% der Gesamtzubereitung.

Mit dem Ziel einer Flexibilisierung der Massen können auch Copolyether mit Molmassen von 4500 bis 20.000 g/mol und mit

Hydroxyl- und/oder Acyl- und/oder Etherendgruppen eingesetzt werden, wie sie in der DE-PS 43 24 322 beschrieben werden, auf die hier vollinhaltlich Bezug genommen wird.

Die erfindungsgemäßen Epoxidmassen können weiterhin Haftvermittler wie beispielsweise Silane enthalten, wobei epoxidgruppenhaltige Silane besonders bevorzugt sind. Typische Vertreter der mit Vorteil einzusetzenden Silane sind Gamma-Glycidyloxypropyltrimethoxysilan, Gamma-Glycidyloxypropyltriethoxysilan und Beta-3,4-Epoxycyclohexylethyltrimethoxysilan.

Die vorgenannten Verbindungen werden typischerweise in Konzentrationen von 0,1 bis 10 und bevorzugt von 0,5 bis 3,5 Gew.-% der Gesamtzubereitung eingesetzt.

Die Massen können weiterhin Thixotropiermittel wie pyrogene Kieselsäure oder Füllstoffe wie Quarzmehl, Glasmehl oder Silikatmehl enthalten.

Die erfindungsgemäßen lichtinitiiert kationisch härtenden Epoxidharzmassen werden zum Verkleben, Vergießen, Abdichten und Beschichten von Substraten verwendet.

Die Massen eignen sich besonders zum Verkleben von Metallen und elektronischen Bauteilen, zum Verkleben von Kunststoffen mit anderen Substraten, zum Bestücken von Leiterplatten sowie als Gießharze in der Elektrotechnik sowie zum Vergießen elektronischer Bauelemente.

Als besondere Form des Einsatzes dieser Massen hat sich die Aktivierung in einer belichteten Durchflußstrecke bewährt, wie sie in der US-A-5 227 637 beschrieben ist, auf die hier vollinhaltlich Bezug genommen wird.

Eine wesentliche Voraussetzung für die Verwendbarkeit der Massen bei diesem Verfahren der Durchflußaktivierung mit nachfolgender Aushärtung bei Raumtemperatur besteht darin, daß die Massen bei Belichtungszeiten, die mindestens dem dreifachen Wert der zur vollständigen Aushärtung bei Raumtemperatur notwendigen Mindestaktivierungszeit entsprechen, keinen Viskositätsanstieg zeigen, was von keiner der vorbeschriebenen Massen erreicht wird.

Die Erfindung wird nachfolgend anhand von Beispielen und Vergleichsbeispielen weiter erläutert:

### Beispiele 1 - 10

In einem 1-Liter-Mehrhalskolben werden die Verbindungen der Komponente (D) vorgelegt, unter Rühren die Verbindungen der Komponenten (A), (B) sowie ggfs. (E) zugegeben und das Gemisch 2 Stunden lang homogenisiert. Die Zugabe der Komponente (C) erfolgt unter Lichtausschluß. Die Massen werden nach Homogenisierung (5 Minuten Rühren) in lichtundurchlässige Behälter abgefüllt.

Die jeweiligen Zusammensetzungen der erfindungsgemäßen Zubereitungen sind in Tabelle 1 angegeben.

Eine Aufstellung der erreichten Eigenschaften enthält Tabelle 2; die Methoden zur Bestimmung dieser Eigenschaften sind nachfolgend beschrieben:

### Ausprüfung der Massen

Für die Ausprüfung der Massen werden folgende Methoden herangezogen:
1. Druckscherfestigkeit
   Es wurden Prüfkörper aus Glas bzw. Polycarbonat der Abmessungen 20 x 20 x 5 mm verwendet. Die Masse wurde in einer Schicht von etwa 100 µm aufgetragen, die beiden Prüfkörper gefügt und die Verbindung mittels der Lampe Delolux 03 (Fa. Delo Industrieklebstoffe, München-Gräfelfing) eine Minute belichtet. Nach der Belichtung wurde die Verbindung entweder 90 Minuten oder 24 Stunden bei Raumtemperatur gelagert und danach geprüft. Die Prüfung der Druckscherfestigkeit erfolgte mit einem Zwick Universal-Prüfgerät bei einer Deformationsgeschwindigkeit von 10 mm/min.
2. Zulässige Belichtungszeit
   Für die Bestimmung der zulässigen Belichtungszeit wurden eine Durchflußaktivierungsapparatur der Fa. Delo Industrieklebstoffe, München-Gräfelfing verwendet.
   Bestimmt wurde hierbei die zulässige Belichtungszeit pro Takt bei einer Dosiermenge von 400 mg pro Takt. Hierzu wurden ausgehend von dem ermittelten Minimalwert der Aktivierungszeit pro Takt (10 sec) die Belichtungszeit in Stufen erhöht und die aktivierte, ausgebrachte Klebstoffmenge gewogen (jeweils 5 Takte bei jeder Belichtungszeit).
   Es wurde die höchste Belichtungszeit ermittelt, bei der noch keine Reduzierung der ausgebrachten Menge pro Takt (bei konstantem Druck auf den Dosiertank) infolge Viskositätserhöhung eintrat.

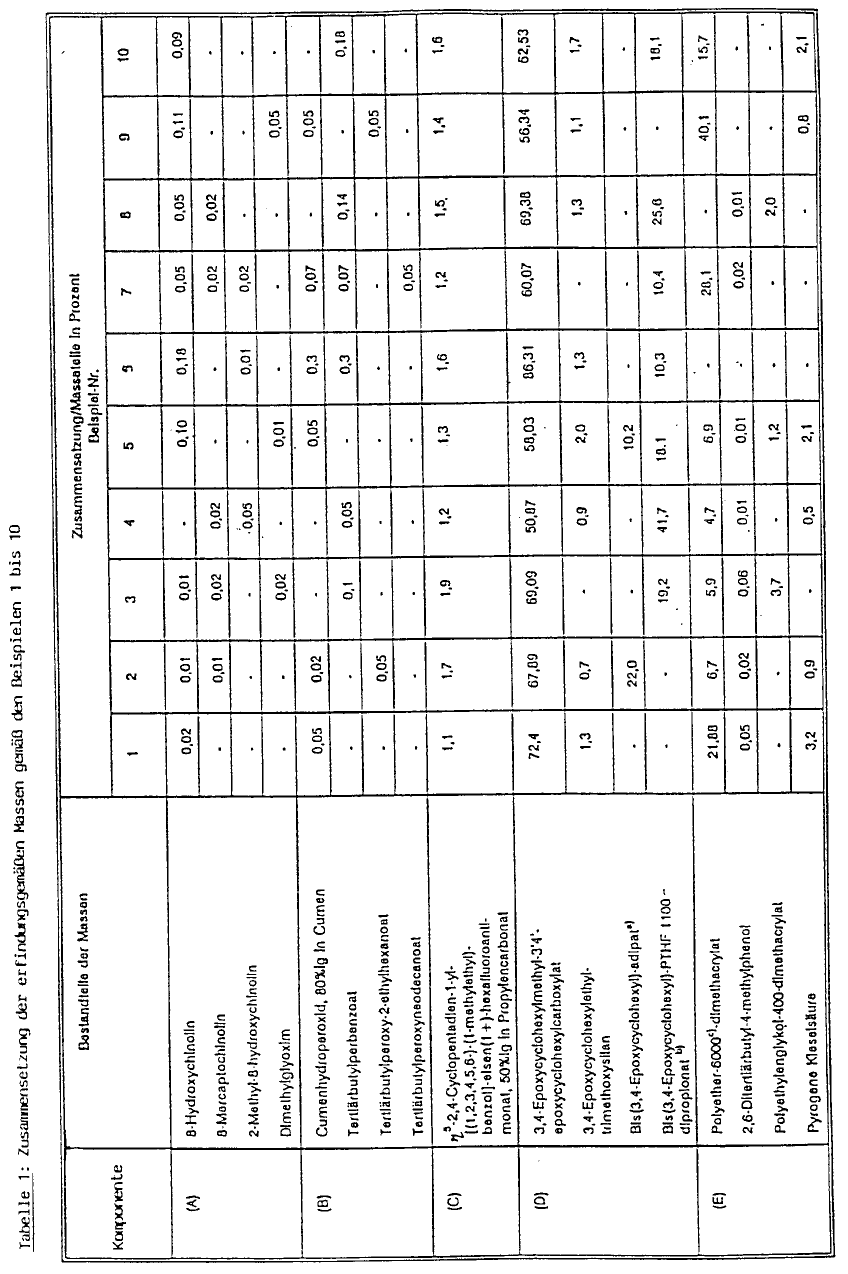

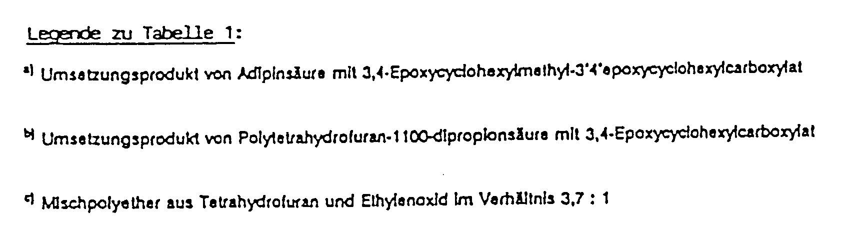

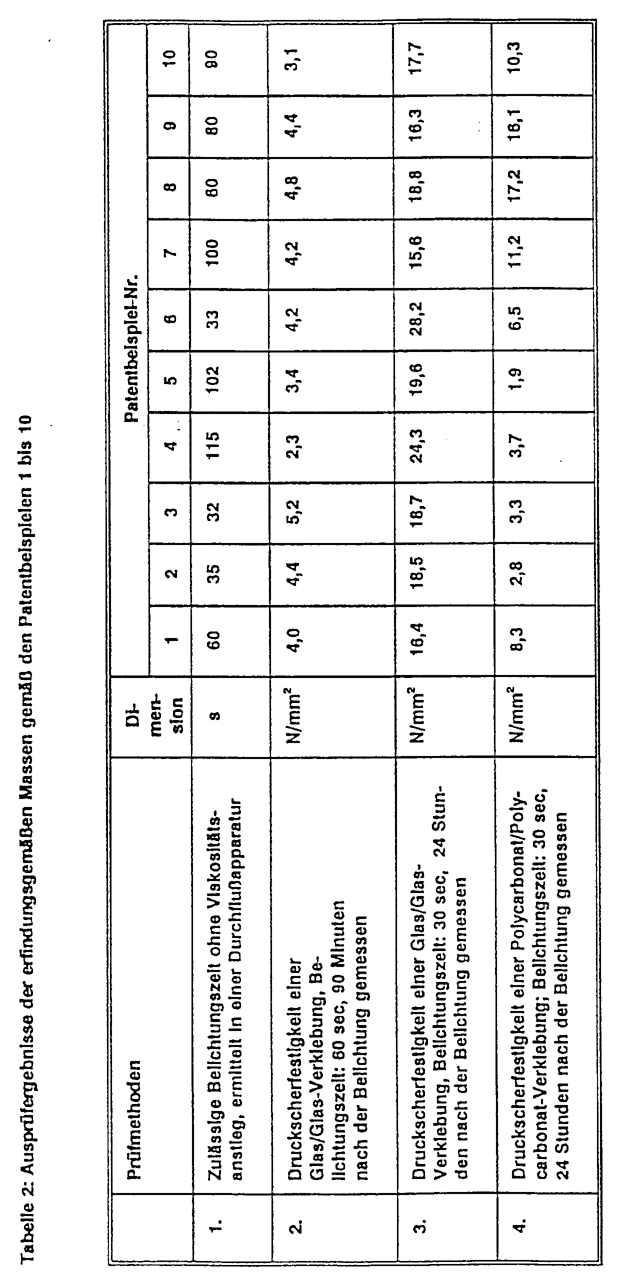

### Vergleichsbeispiel

Entsprechend EP-A-0 388 775 wurde eine Zubereitung hergestellt, bestehend aus:
- 46 Masseteilen in Prozent 3,4-Epoxycyclohexylmethyl-3',4'-epoxycyclohexylcarboxylat
- 46 Masseteilen in Prozent eines Bisphenol-A-diglycidethers
- 3 Masseteilen in Prozent Irgacure^{(R)} 261 der Firma Ciba-Geigy
   (η⁵-2,4-Cyclopentadien-1-yl)-(1,2,3,4,5,6-)-1(methylethylbenzol-Eisen (1+)-hexafluorophosphat (1-)
- 5 Masseteilen in Prozent feinteiliger hydrophobierter Kieselsäure (Aerosil R 202 der Firma Degussa).

Diese Masse wurde analog den erfindungsgemäßen Massen gemäß den Beispielen 1 - 10 geprüft. Die Ermittlung der Druckscherfestigkeit nach Belichtung und Lagerung bei Raumtemperatur brachte folgende Werte:

| **Prüfmethoden** | **Dimension** | |
|---|---|---|
| Druckscherfestigkeit einer Glas/Glas-Verklebung, Belichtungszeit: 60 sec, 90 Minuten nach der Belichtung gemessen | N/mm² | <1,0 |
| Druckscherfestigkeit einer Glas/Glas-Verklebung, Belichtungszeit: 30 sec, 24 Stunden nach der Belichtung gemessen | N/mm² | 2,0 |
| Druckscherfestigkeit einer Polycarbonat/Polycarbonat-Verklebung; Belichtungszeit: 30 sec, 24 Stunden nach der Belichtung gemessen | N/mm² | 1,7 |

Erst durch eine Erwärmung der belichteten Massen auf 110°C konnte eine ausreichende Aushärtung erreicht werden.

Bei der Bestimmung der zulässigen Belichtungszeit auf der Durchflußaktivierungsapparatur zeigte die Masse gemäß dem Vergleichsbeispiel bereits nach 19 sec Belichtungszeit eine Reduzierung der ausgebrachten Menge pro Takt infolge der Viskositätserhöhung der Masse.

Damit sind die Vorteile der erfindungsgemäßen Massen wie verlängerte zulässige Belichtungszeit ohne Viskositätserhöhung und schnelle Aushärtung bei Raumtemperatur offensichtlich.

## Patentansprüche

1. Lichtinitiiert kationisch härtende Epoxidmasse, bestehend aus
(A) 0,0001 bis 10 Teilen mindestens eines Verzögerers, ausgewählt aus der aus folgenden Verbindungsklassen und Verbindungen bestehenden Gruppe:
a) reduzierend wirkende Substanzen,
b) basische Substanzen,
c) Komplexbildner oder Chelatisierungsmittel,
(B) 0,001 bis 10 Teilen mindestens eines Beschleunigers,
(C) 0,1 bis 5 Teilen eines Ferrocenium-Komplexsalzes,
(D) 10 bis 99,5 Teilen mindestens einer cycloaliphatische Epoxidgruppen enthaltenden Verbindung,
(E) 0 bis 60 Teilen Hilfs- und Zusatzstoffen aus der Gruppe der Flexibilisierungsmittel, radikalisch polymerisierbaren Oligomere, Füllstoffe, Pigmente, Farbstoffe und Stabilisatoren,
bezogen auf jeweils 100 Teile der Gesamtmasse.

2. Epoxidmasse nach Anspruch 1, dadurch gekennzeichnet, daß sie als Verzögerer basische Substanzen wie Alkoholate und/oder Amine enthält.

3. Epoxidharzmasse nach Anspruch 1, dadurch gekennzeichnet, daß sie als Verzögerer mindestens einen Komplexbildner oder ein Chelatisierungsmittel enthält.

4. Epoxidharzmasse nach Anspruch 3, dadurch gekennzeichnet, daß sie als Verzögerer mindestens eine Verbindung aus der Gruppe der β-Diketone, der in 8-Stellung substituierten Chinoline und Oxime enthält.

5. Epoxidharzmasse nach Anspruch 4, dadurch gekennzeichnet, daß sie als Verzögerer Acetylaceton enthält.

6. Epoxidharzmasse nach Anspruch 4, dadurch gekennzeichnet, daß sie als Verzögerer Dimethylglyoxim enthält.

7. Epoxidharzmasse nach Anspruch 4, dadurch gekennzeichnet, daß sie als Verzögerer in 8-Stellung substituierte Chinoline der allgemeinen Formel 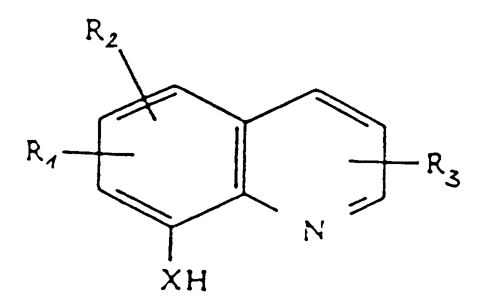 enthält, worin R₁, R₂ und R₃ unabhängig voneinander Wasserstoff, Halogen, Alkyl, Nitro, Nitroso, Sulfo und X entweder O, S oder NH bedeuten.

8. Epoxidharzmasse nach Anspruch 7, dadurch gekennzeichnet, daß sie als Verzögerer ausschließlich mindestens ein 8-Hydroxychinolin und/oder mindestens ein 8-Mercaptochinolin enthält.

9. Epoxidharzmasse nach einem der Ansprüche 1 bis 7, dadurch gekennzeichnet, daß sie als Verzögerer mindestens ein 8-Hydroxychinolin und/oder mindestens ein 8-Mercaptochinolin, jeweils in Kombination mit mindestens einer anderen verzögernd wirkenden Verbindung enthält.

10. Epoxidharzmasse nach einem der Ansprüche 7 bis 9, dadurch gekennzeichnet, daß sie als Verzögerer 8-Hydroxychinolin ("Oxin") im Konzentrationsbereich von 0,001 bis 0,5 Gew.-% der Gesamtmasse enthält.

11. Epoxidharzmasse nach einem der Ansprüche 1 bis 10, dadurch gekennzeichnet, daß sie oxidative Beschleuniger enthält.

12. Epoxidharzmasse nach Anspruch 11, dadurch gekennzeichnet, daß sie Peroxide oder Hydroperoxide als oxidative Beschleuniger enthält.

13. Epoxidharzmasse nach Anspruch 12, dadurch gekennzeichnet, daß sie Tertiärbutylperester in einer Konzentration von 0,001 bis 3 Gew.-% enthält.

14. Epoxidharzmasse nach Anspruch 12, dadurch gekennzeichnet, daß sie 0,001 bis 5 Gew.-% organische Hydroperoxide enthält.

15. Epoxidharzmasse nach Anspruch 14, dadurch gekennzeichnet, daß das organische Hydroperoxid Cumolhydroperoxid ist.

16. Epoxidharzmasse nach einem der Ansprüche 1 bis 15, dadurch gekennzeichnet, daß sie Ferroceniumhexafluoroantimonat als Photoinitiator enthält.

17. Epoxidharzmasse nach Anspruch 16, dadurch gekennzeichnet, daß das Ferrocenium-hexafluoroantimonat in Form einer 30 bis 70 prozentigen Lösung in Propylencarbonat zugesetzt worden ist.

18. Epoxidharzmasse nach einem der Ansprüche 1 bis 17, dadurch gekennzeichnet, daß ihr Hauptbestandteil 1,4-Epoxycyclohexylmethyl-3',4'-epoxycyclohexancarboxylat ist.

19. Epoxidharzmasse nach einem der Ansprüche 1 bis 18, dadurch gekennzeichnet, daß sie kettenverlängerte cycloaliphatische Epoxidharze, hergestellt aus Dicarbonsäuren und difunktionellen cycloaliphatischen Epoxidharzen, in Konzentration von 1 bis 50 Gew.-% enthält.

20. Verwendung der Epoxidharzmasse gemäß einem der Ansprüche 1 bis 19 zum Verkleben, Vergießen, Abdichten oder Beschichten von Substraten.

## Claims

1. A photoinitiated, cationically curable epoxy composition, consisting of
(A) 0.0001 to 10 parts of at least one inhibiting agent selected from the group of compound classes and compounds consisting of a) reductive acting substances, b) basic substances, c) complexing agents or chelating agents,
(B) 0.001 to 10 parts of at least one accelerator,
(C) 0.1 to 5 parts of a ferrocenium complex salt,
(D) 10 to 99.5 parts of at least one compound containing cycloaliphatic epoxy groups,
(E) 0 to 60 parts of auxiliary products and additives from the group of flexibility agents, radically polymerizable oligomers, fillers, pigments, dyes and stabilisers,
each per 100 parts of the total composition.

2. The epoxy composition of claim 1, characterized in that it contains basic substances like alcoholates and/or amines as inhibiting agents.

3. The epoxy resin composition of claim 1, characterized in that it contains at least one complexing agent or chelating agent as an inhibiting agent.

4. The epoxy resin composition of claim 3, characterized in that it contains as an inhibiting agent at least one compound selected from the group consisting of β-diketones, quinolines substituted in 8-position, and oximes.

5. The epoxy resin composition of claim 4, characterized in that it contains acetylacetone as an inhibiting agent.

6. The epoxy resin composition of claim 4, characterized in that it contains dimethylglyoxime as an inhibiting agent.

7. The epoxy resin composition of claim 4, characterized in that it contains as inhibiting agents quinolines substituted in 8-position having the general formula 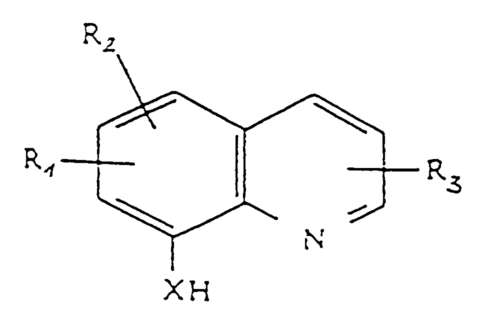 wherein R₁, R₂ and R₃, independently of each other, are hydrogen, halogen, alkyl, nitro, nitroso, sulfo, and X is O, S or NH.

8. The epoxy resin composition of claim 7, characterized in that it only contains at least one 8-hydroxyquinoline and/or at least one 8-mercaptoquinoline as inhibiting agents.

9. The epoxy resin composition of any one of claims 1 to 7, characterized in that it contains at least one 8-hydroxyquinoline and/or at least one 8-mercaptoquinoline as inhibiting agents, each in combination with at least one other compound having an inhibiting effect.

10. The epoxy resin composition of any one of claims 7 to 9, characterized in that it contains 8-hydroxyquinoline ("oxine") in a concentration range of 0.001 to 0.5 percent by weight of the total composition as an inhibiting agent.

11. The epoxy resin composition of any one of claims 1 to 10, characterized in that it contains oxidative accelerators.

12. The epoxy resin composition of claim 11, characterized in that it contains peroxides or hydroperoxides as oxidative accelerators.

13. The epoxy resin composition of claim 12, characterized in that it contains tertiary butyl peresters in a concentration of 0.001 to 3 percent by weight.

14. The epoxy resin composition of claim 12, characterized in that it contains 0.001 to 5 percent by weight of organic hydroperoxides.

15. The epoxy resin composition of claim 14, characterized in that said organic hydroperoxide is cumene hydroperoxide.

16. The epoxy resin composition of any one of claims 1 to 15, characterized in that it contains ferroceniumhexafluoroantimonate as said photoinitiator.

17. The epoxy resin composition of claim 16, characterized in that said ferrocenium-hexafluoroantimonate has been added in the form of a 30 to 70 percent solution in propylene carbonate.

18. The epoxy resin composition of any one of claims 1 to 17, characterized in that its main component is 3,4-epoxycyclohexylmethyl-3',4'-epoxycyclohexanecarboxylate.

19. The epoxy resin composition of any one of claims 1 to 18, characterized in that it contains chain-lengthened cycloaliphatic epoxy resins, produced from dicarboxylic acids and difunctional cycloaliphatic epoxy resins, in concentrations of from 1 to 50 percent by weight.

20. Use of an epoxy resin composition according to any one of claims 1 to 19, for bonding, casting, sealing or coating substrates.

## Revendications

1. Composition époxyde durcissant cationiquement par photoinduction, constituée de
(A) 0,0001 à 10 parties d'au moins un retardateur, choisi parmi le groupe constitué des classes de composés et des composés suivants:
a) des substances à effet réducteur,
b) des substances basiques,
c) des formateurs de complexes ou des agents chélatants,
(B) 0,001 à 10 parties d'au moins un accélérateur,
(C) 0,1 à 5 parties d'un sel complexe de férrocénium,
(D) 10 à 99,5 parties d'au moins un composé contenant des groupes époxyde cycloaliphatiques,
(E) 0 à 60 parties d'adjuvants et additifs du groupe des agents flexibilisants, des oligomères polymérisables par réaction radicalaire, des matériaux de charge, des pigments, des colorants et des stabilisateurs,
rapporté à chaque fois à 100 parties de la masse totale.

2. Composition époxyde selon la revendication 1 ,caractérisée en ce qu'elle contient comme retardateurs des substances basiques comme des alcoolates et/ou des amines.

3. Composition de résine époxyde selon la revendication 1, caractérisée en ce qu'elle contient comme retardateur au moins un formateur de complexe ou un agent chélatant.

4. Composition de résine époxyde selon la revendication 3, caractérisée en ce qu'elle contient comme retardateur au moins un composé du groupe constitué des β-dicétones, des quinoléines substituées en position 8 et des oximes.

5. Composition de résine époxyde selon la revendication 4, caractérisée en ce qu'elle contient comme retardateur de l'acétylacétone.

6. Composition de résine époxyde selon la revendication 4, caractérisée en ce qu'elle contient comme retardateur du diméthylglyoxime.

7. Composition de résine époxyde selon la revendication 4, caractérisée en ce qu'elle contient comme retardateur des quinoléines substituées en position 8 de formule générale 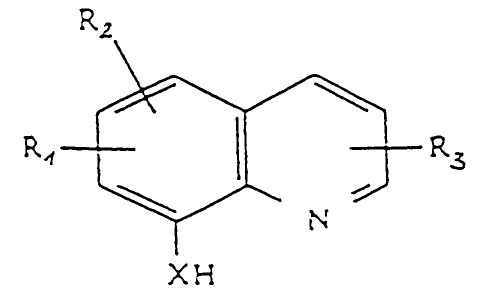 dans laquelle R₁, R₂ et R₃ représentent indépendamment l'un de l'autre un hydrogène, un halogène, un alkyle, un nitro, un nitroso, un sulfo et X représente O, S ou NH.

8. Composition de résine époxyde selon la revendication 7, caractérisée en ce qu'elle contient comme retardateur exclusivement au moins une 8-hydroxyquinoléine et/ou au moins une 8-mercaptoquinoléine.

9. Composition de résine époxyde selon l'une des revendications 1 à 7, caractérisée en ce qu'elle contient comme retardateur au moins une 8-hydroxyquinoléine et/ou au moins une 8-mercaptoquinoléine, à chaque fois en combinaison avec au moins un autre composé à action retardatrice.

10. Composition de résine époxyde selon la revendication 7, caractérisée en ce qu'elle contient comme retardateur la 8-hydroxyquinoléine ("oxine") dans une gamme de concentration de 0,001 à 0,5% en poids de la composition totale.

11. Composition de résine époxyde selon l'une des revendications 1 à 10, caractérisée en ce qu'elle contient des accélérateurs oxydants.

12. Composition de résine époxyde selon la revendication 11, caractérisée en ce qu'elle contient des péroxydes ou des hydropéroxydes comme accélérateurs oxydants.

13. Composition de résine époxyde selon la revendication 12, caractérisée en ce qu'elle contient des peresters de tert-butyle à une concentration de 0,001 à 3% en poids.

14. Composition de résine époxyde selon la revendication 12, caractérisée en ce qu'elle contient de 0,001 à 5% en poids de hydropéroxydes organiques.

15. Composition de résine époxyde selon la revendication 14, caractérisée en ce que ledit hydropéroxyde organique est l'hydropéroxyde de cumol.

16. Composition de résine époxyde selon l'une des revendications 1 à 15, caractérisée en ce qu'elle contient de l'hexafluoroantimonate de ferrocénium comme photoinducteur.

17. Composition de résine époxyde selon la revendication 16, caractérisée en ce que l'hexafluoroantimonate de ferrocénium a été ajouté sous la forme d'une solution à 30 à 70% dans le carbonate de propylène.

18. Composition de résine époxyde selon l'une des revendications 1 à 17, caractérisée en ce que son composant principal est le carboxylate de 3,4-époxy-cyclohexylméthyl-3',4'-époxycyclohexane.

19. Composition de résine époxyde selon l'une des revendications 1 à 18, caractérisée en ce qu'elle contient des résines époxyde cycloaliphatiques à chaîne allongée, préparées à partir d'acides dicarboxyliques et de résines époxyde cycloaliphatiques bifonctionnelles, à des concentrations de 1 à 50% en poids.

20. Application de la composition de résine époxyde selon l'une des revendications 1 à 19 au collage, au coulage, à l'étanchement ou au recouvrement de substrats.
